# EUROPÄISCHE PATENTSCHRIFT

(11) **EP 1 394 504 B1**
(45) Veröffentlichungstag und Bekanntmachung des Hinweises auf die Patenterteilung: **09.11.2005**
(21) Anmeldenummer: 03017330.6
(22) Anmeldetag: 31.07.2003
(51) Int. Cl.: G01B 11/27, G01V 8/14

(54) **Lichtgitter**
Light curtain
Rideau optique

(30) Priorität: 30.08.2002 DE 10239940
(43) Veröffentlichungstag der Anmeldung: 03.03.2004
(73) Patentinhaber: SICK AG, 79183 Waldkirch, Breisgau (DE)
(72) Erfinder: Wüstefeld, Martin, 79350 Sexau (DE)
(74) Vertreter: Ludewigt, Christoph

(56) Entgegenhaltungen:
- EP-A- 0 005 853
- EP-A- 0 422 685
- EP-B- 0 889 332
- US-A- 3 470 377
- US-A- 3 554 653
- US-A- 4 243 877

## Beschreibung

Die Erfindung betrifft ein Lichtgitter nach dem Oberbegriff des Anspruchs 1.

Lichtschranken oder Lichtgitter werden verwendet, um vorgegebene Bereiche zu überwachen. Während die Lichtschranke nur einen einzigen Lichtstrahl aufweist, sind bei einem Lichtgitter eine Mehrzahl von zueinander parallelen Lichtstrahlen vorgesehen.

Der Begriff "Licht" ist nicht auf das sichtbare Licht beschränkt. Unter "Licht" sind allgemein elektromagnetische Strahlen, also UV-Licht, IR-Licht sowie sichtbares Licht zu verstehen, welche üblicherweise für den Betrieb von Lichtschranken oder Lichtgittern eingesetzt werden können.

Ein Problem bei den bekannten Lichtschranken oder Lichtgittern besteht in der Ausrichtung der zugehörigen Gehäuse, in denen die Lichtsender sowie Lichtempfänger angeordnet sind. Diese Gehäuse besitzen mehrere Freiheitsgrade, d.h. sie können gekippt, gedreht sowie linear verschoben werden. Aus diesem Grunde ist es bekannt, eine Einrichtung zum Ausrichten der beiden Gehäuse zu verwenden.

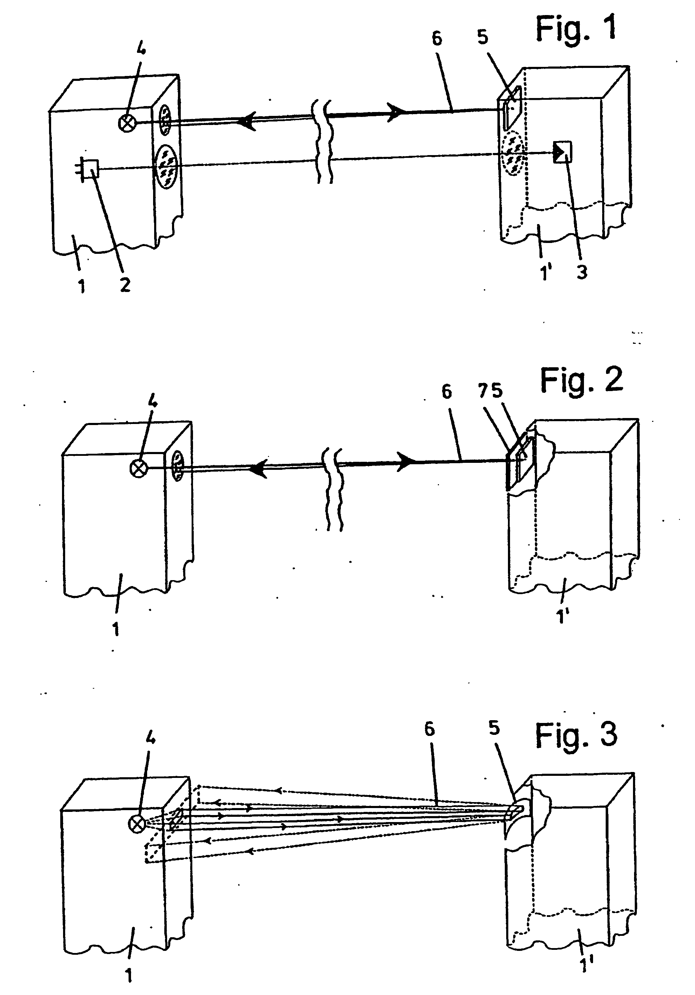

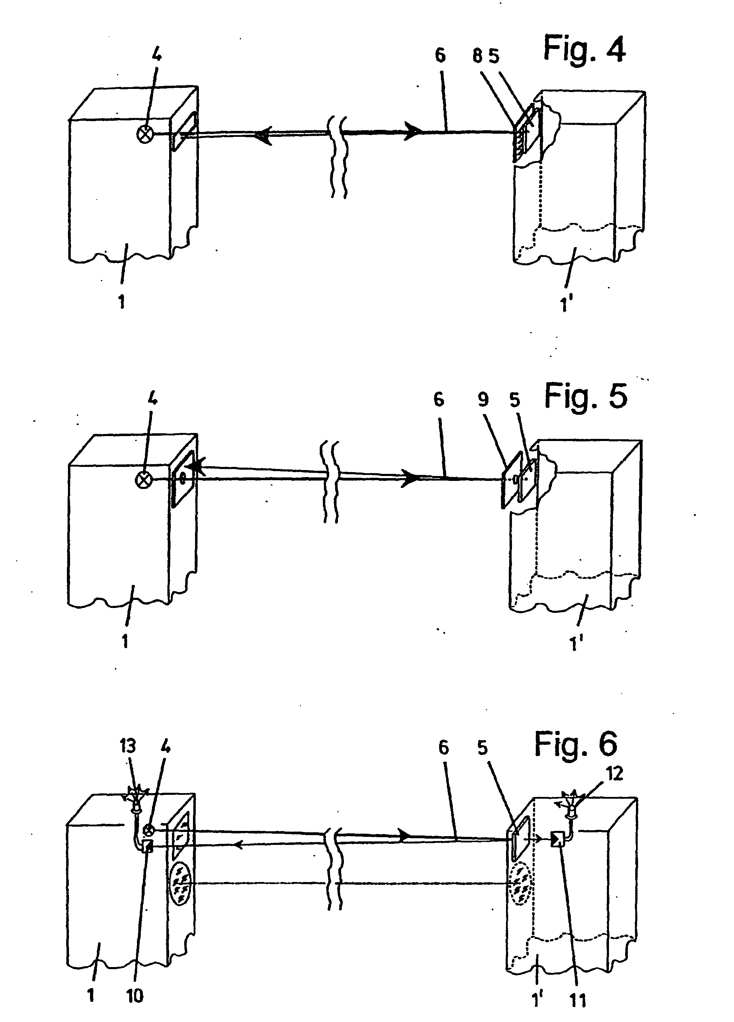

Eine Einrichtung zum Ausrichten der beiden Gehäuse der eingangs angegebenen Art ist aus der EP 0 889 332 B1 bekannt. Dabei sind in dieser Druckschrift mehrere Ausführungsformen einer Ausrichthilfe offenbart. Bei den Ausführungsformen der Fig. 2 und 3 sind zwei Richtstrahlen am oberen sowie am unteren Ende der beiden Gehäuse vorgesehen. Dabei befindet sich in dem einen Gehäuse ein Ausrichtlichtsender und im anderen Gehäuse der dazugehörige Ausrichtlichtempfänger. Der Nachteil bei dieser Ausrichthilfe besteht darin, daß zwei Richtstrahlen mit jeweils einem Sender und einem Empfänger vorgesehen sind, was insgesamt kostenaufwendig ist. Außerdem wird viel Zeit für die Justierung benötigt. Bei der Ausführungsform in Fig. 4 weist die Ausrichteinrichtung in einem Gehäuse oben einen Ausrichtlichtsender und unten einen Ausrichtlichtempfänger auf. Im anderen Gehäuse ist ein Umlenkspiegel-Paar angeordnet, wobei zunächst der erste Umlenkspiegel das vom Ausrichtlichtsender ausgesandte Lichtes auf den zweiten Umlenkspiegel reflektiert, welche wiederum den Lichtstrahl zurück zum ersten Gehäuse auf den Ausrichtlichtempfänger reflektiert. Der Nachteil bei dieser bekannten Ausrichteinrichtung besteht gemäß den Ausführungen in dieser Druckschrift darin, daß die Umlenkspiegel sehr genau ausgerichtet werden müssen, da sich Winkelfehler bei diesem System vervierfachen.

Aus der EP 0 422 685 A2 ist eine Lichtschranke bekannt, bei welcher lediglich ein Lichtsender auf einen Lichtempfänger ausgerichtet wird. Dazu weist der Lichtempfänger neben dem Empfangsobjektiv einen Retroreflektor auf, der das vom Lichtsender emittierte Licht reflektiert, was durch Beobachtung mit dem Auge erkannt werden kann, wodurch der Sendestrahl auf den Lichtempfänger ausgerichtet wird.

Aus EP 0 005 853 ist eine weitere Lichtschranke bekannt, bei der die Justierung erreicht wird, indem vor einen Lichtsender oder vor einem Lichtempfänger oder vor einen Reflektor ein Aufsatz aufgesteckt wird, der es ermöglicht, sich mittels eines halbdurchlässigen Spiegels in den aktiven Strahlengang der Lichtschranke "einzuklinken", so dass Lichtsender und Lichtempfänger oder Reflektor mit dem Auge aufeinander ausgerichtet werden können.

Aus der US 4,243,877 ist eine separate Justiervorrichtung bekannt mit einem in einem ersten Aufsatzgehäuse angeordneten Lichtsender und einem in einem zweiten Aufsatzgehäuse angeordnetem Spiegel. Die Aufsatzgehäuse können auf beispielsweise Maschinenteile aufgesetzt werden, zum optischen Ausrichten der Teile zueinander.

Davon ausgehend liegt der Erfindung die **Aufgabe** zugrunde, ein Lichtgitter der eingangs angegebenen Art mit einer preiswerten und zuverlässig arbeitenden Ausrichteinrichtung für die beiden Gehäuse zu schaffen.

Die technische **Lösung** ist gekennzeichnet durch die Merkmale im Kennzeichen des Anspruchs 1.

Dadurch ist eine Ausrichteinrichtung für ein Lichtgitter geschaffen, welche zum einen sehr preiswert ist und welche zum anderen auf einfache Weise eine Ausrichtung der beiden Gehäuse ermöglicht. Die Grundidee der Ausrichteinrichtung liegt in einem Richtstrahl, welcher von einem Spiegel in sich oder (bei der Verwendung eines Ausrichtlichtempfängers) nahezu in sich zurückreflektiert wird. Bei dem Spiegel handelt es sich um einen ebenen Spiegel, dessen Fläche senkrecht zur optischen Achse des Richtstrahls ausgerichtet ist. Grundsätzlich ist es denkbar, mehrere Richtstrahlen zu verwenden. Der oder die Richtstrahlen sind dabei parallel zum Lichtstrahl der Lichtschranke bzw. des Lichtgitters ausgerichtet. Der Justiervorgang ist dabei wie folgt: Das Gehäuse mit dem Ausrichtlichtsender wird so lange gekippt, gedreht und verschoben, bis der Richtstrahl auf dem Spiegel des anderen Gehäuses auftrifft. Der Spiegel ist somit gewissermaßen die "Zielmarke" für den Richtstrahl. Anschließend wird das Gehäuse mit dem Lichtstrahl so lange gekippt, gedreht und verschoben, bis der Richtstrahl in sich zurückgespiegelt wird und auf den Ausrichtlichtsender trifft. Dieser ist die "Zielmarke". Als Lichtquelle dient ein Laser oder eine Punktlichtquelle. Der Richtstrahl ist dabei nahezu kollimiert. Das Licht des Ausrichtlichtsenders liegt im sichtbaren Spektralbereich, damit eine Ausrichtung ohne anderweitige Hilfsmittel, wie beispielsweise Empfänger, lediglich auf der Basis einer optischen Erkennung durchgeführt werden kann. Vorzugsweise geht der Ausrichtlichtsender automatisch nach einer vorgewählten Zeit aus. Schließlich kann das von dem Ausrichtlichtsender ausgestrahlte Licht moduliert sein oder im Gleichlichtbetrieb arbeiten.

Damit der Lichtstrahl auf den Gehäusen dann besser erkannt werden kann, wenn er nicht auf den Spiegel sowie - der reflektierte Richtstrahl - auf den Ausrichtlichtsender exakt auftrifft, ist die Aufbringung des zusätzlichen Materials vorgesehen, so daß kann der Richtstrahl leichter erkannt werden, kann wenn er sich außerhalb des Sollgebietes befindet. Der Vorteil liegt in der Erleichterung der Ausrichtung durch eine bessere Sichtbarkeit. Dies betrifft sowohl die B Intensität als auch den größeren Erkennbereich des Richtstrahls. Als Material kann eine reflektierende Folie, aber auch ein entsprechender Anstrich sein, welcher beispielsweise auf einem Trägermaterial aufgebracht ist.

Der Vorteil der Weiterbildung gemäß Anspruch 2 besteht darin, daß damit ein Kippen des den Spiegel aufweisenden Gehäuses dergestalt erkannt werden kann, daß das Gehäuse um eine zur optischen Achse des Richtstrahls parallele Achse gedreht ist. Die Intensität des reflektierten Richtstrahles ist dann am größten, wenn der Verdrehwinkel gleich Null ist.

Auch mit der Weiterbildung gemäß Anspruch 3 kann detektiert werden, ob das Gehäuse mit dem Spiegel verdreht ist. Hier wird ein linienförmiger Richtstrahl sowie eine Schlitzblende vor dem Spiegel verwendet. Die Schrägstellung der reflektierten Richtstrahlen ist das Kennzeichen für eine Verdrehung.

Die Weiterbildung gemäß Anspruch 4 bringt einen Vorteil dann mit sich, wenn die beiden Gehäuse relativ weit auseinanderliegen. Durch den visuellen oder akkustischen Signalgeber wird das Erreichen der gewünschten Justierposition angezeigt.

Während bei den vorbeschriebenen Varianten der Richtstrahl in sich exakt zurückreflektiert wird, geht die Weiterbildung gemäß Anspruch 5 davon aus, daß der Richtstrahl nahezu in sich zurückreflektiert wird. Denn der Ausrichtlichtempfänger ist etwas versetzt neben dem Ausrichtlichtsender angeordnet, so daß eine Anordnung von Sender und Empfänger in einer gemeinsamen optischen Achse nicht möglich ist. Mit dem Ausrichtlichtempfänger hat man die Möglichkeit, diesen an eine Signaleinrichtung visueller oder akustischer Art anzuschließen, so daß ein entsprechendes Signal erzeugt wird, daß umso größer ist, je exakter sich der Richtstrahl an der exakten Position befindet.

Sechs Ausführungsbeispiele einer erfindungsgemäßen Ausrichteinrichtung für Lichtschranken oder Lichtgitter werden nachfolgend anhand der Zeichnungen beschrieben. In diesen zeigt:
- Fig. 1: ein Ausführungsbeispiel der Ausrichteinrichtung in einer Basisversion;
- Fig. 2: ein Ausführungsbeispiel unter Verwendung polarisierten Lichts sowie eines Polarisationsfilters;
- Fig. 3: ein Ausführungsbeispiel unter Verwendung eines zylindrischen Spiegels;
- Fig. 4: eine Ausführungsbeispiel unter Verwendung einer Schlitzblende;
- Fig. 5: ein Ausführungsbeispiel unter Verwendung einer reflektierenden Folie;
- Fig. 6: ein Ausführungsbeispiel unter Verwendung von visuellen oder akustischen Signalen.

Die Ausführungsform der erfindungsgemäßen Ausrichteinrichtung in Form einer Basisversion weist zwei Gehäuse 1, 1' auf, wobei in dem einen Gehäuse 1 ein Lichtsender 2 und in dem anderen Gehäuse 1' ein Lichtempfänger 3 für eine Lichtschranke angeordnet ist.

Weiterhin ist eine Ausrichteinrichtung vorgesehen. Zu diesem Zweck ist in dem Gehäuse 1 ein Ausrichtlichtsender 4 sowie in dem Gehäuse 1' ein Spiegel 5 angeordnet. Dessen Fläche erstreckt sich senkrecht zur optischen Achse der Lichtschranke.

Die Funktionsweise ist wie folgt:

Der Ausrichtlichtsender 4 sendet einen Richtstrahl 6 aus. Bei richtiger Justierung trifft dieser Richtstrahl 6 auf den Spiegel 5 und wird von diesem zurückreflektiert und trifft dann wieder auf den Ausrichtlichtsender 4. Durch entsprechendes Kippen und Verschieben des Gehäuses 1' läßt sich erreichen, daß der Richtstrahl 6 wieder exakt auf die gewünschte Sollstelle zurückreflektiert wird.

Die Ausführungsvariante in Fig. 2 verwendet als Licht polarisiertes Licht. Darüber hinaus ist vor dem Spiegel 5 ein Polarisationsfilter 7 angeordnet. Sofern das Gehäuse 1 um die Achse des Richtstrahls 6 verdreht ist, wird die Intensität des reflektierten Richtstrahls 6 geschwächt und ist ein Maß für den Kippwinkel.

Die Ausführungsvariante in Fig. 3 verwendet als Spiegel 5 einen zylindrischen Spiegel 5. Ist auch hier das Gehäuse 1' um die Achse des Richtstrahls 6 verdreht, entsteht auf dem Gehäuse 1 ein deformierter Reflex. Liegt keine Verdrehung vor, besitzt der reflektierte Lichtfleck die minimale Höhe, sofern es sich bei dem Richtstrahl 6 um einen linienförmigen Lichtstrahl handelt.

Die Ausführungsvariante in Fig. 4 verwendet einen schlitzförmigen Richtstrahl 6 sowie vor dem Spiegel 5 eine Schlitzblende 8. Durch dessen Schlitze ist eine Kippabweichung des Gehäuses 1' feststellbar.

Bei der Ausführungsvariante in Fig. 5 wird um den Richtstrahl 6 herum ein spezielles Material 9, beispielsweise eine reflektierende Folie, verwendet, wobei sich dieses Material 9 auf dem jeweiligen Gehäuse 1, 1' befindet. Der Vorteil liegt darin, daß dieses Material 9 die Sollposition des Richtstrahls 6 großflächig umgibt, so daß der Richtstrahl 6, sofern er nicht auf die Sollposition trifft, besser sichtbar ist. Dies erleichtert die Justierung.

Die Ausführungsvariante gemäß Fig. 6 schließlich weist in dem Gehäuse 1 neben dem Ausrichtlichtsender einen Ausrichtlichtempfänger 10 auf. Außerdem ist der Spiegel 5 teildurchlässig. In diesem Fall ist hinter dem Spiegel 5 ein weiterer Ausrichtlichtempfänger 11 angeordnet, welcher mit einer Signaleinrichtung 12 verbunden ist. Diese Variante ist insbesondere bei großen Reichweiten von Vorteil. Trifft nämlich der Richtstrahl 6 auf den Ausrichtlichtempfänger 11, wird über die Signaleinrichtung 12 ein entsprechend starkes Signal abgegeben. Gleiches gilt auch für den reflektierten Richtstrahl 6. Trifft dieser auf die Ausrichteinrichtung 10, wird über eine Signaleinrichtung 13 ein entsprechend starkes Signal abgegeben.

### Bezugszeichenliste

- 1, 1': Gehäuse
- 2: Lichtschranke
- 3: Lichtempfänger
- 4: Ausrichtlichtsender
- 5: Spiegel
- 6: Richtstrahl
- 7: Polarisationsfilter
- 8: Schlitzblende
- 9: Material
- 10: Ausrichtlichtempfänger
- 11: Ausrichtlichtempfänger
- 12: Signaleinrichtung
- 13: Signaleinrichtung

## Patentansprüche

1. Lichtgitter mit mehreren, in einem ersten Gehäuse (1) angeordneten Lichtsendern (2), mit dazu korrespondierenden, in einem zweiten Gehäuse (1') angeordneten Lichtempfängern (3), sowie mit einer Einrichtung zum Ausrichten der beiden Gehäuse (1,1'), wobei in einem der Gehäuse (1) zusätzlich zu den Lichtsendern (2) ein Ausrichtlichtsender (4) und im anderen Gehäuse (1') ein Spiegel (5) angeordnet ist, welcher den Richtstrahl (6) zum erstgenannten Gehäuse (1) zurückreflektiert, **dadurch gekennzeichnet, daß** der Spiegel (5) ein ebener Spiegel ist und derart angeordnet ist, daß er bei richtiger Justierung der beiden Gehäuse zueinander, den vom Ausrichtlichtsender (4) ausgesandten Richtstrahl (6) in sich oder nahezu in sich zurückreflektiert und daß der Ausrichtlichtsender (4) und/oder der Spiegel (5) um den Sollstrahlengang des Richtstrahls (6) herum mit einem Material (9) auf dem jeweiligen Gehäuse (1,1') versehen ist, welches den dort auftreffenden Richtstrahl (6) sichtbar werden läßt.

2. Lichtgitter nach Anspruch 1, **dadurch gekennzeichnet, daß** der Richtstrahl (6) polarisiert ist und daß vor dem Spiegel (5) ein Polarisationsfilter (7) angeordnet ist.

3. Lichtgitter nach einem der vorhergehenden Ansprüche, **dadurch gekennzeichnet, daß** der Richtstrahl (6) linienförmig ausgebildet ist und daß vor dem Spiegel (5) eine Schlitzblende (8) angeordnet ist.

4. Lichtgitter nach einem der vorhergehenden Ansprüche, **dadurch gekennzeichnet, daß** der Spiegel (5) ein teildurchlässiger Spiegel (5) ist und daß sich hinter dem Spiegel (5) ein Ausrichtlichtempfänger (11) befindet, welcher an eine visuelle oder akustische Signaleinrichtung (12) angeschlossen ist.

5. Lichtgitter nach einem der vorhergehenden Ansprüche, **dadurch gekennzeichnet, daß** benachbart zum Ausrichtlichtsender (4) ein Ausrichtlichtempfänger (10) angeordnet ist, welcher an eine visuelle oder akustische Signaleinrichtung (13) angeschlossen ist.

## Claims

1. Light grid with several light sources (2) in a first housing (1), and corresponding light detectors (3) in a second housing (1'), and an alignment apparatus for aligning the housings (1, 1'), whereby an alignment light emitter (4) is included in one of the housings (1) in addition to the light sources (2) and a mirror (5) in the other housing (1') is positioned to reflect the alignment beam (6) back to the first housing (1),
**characterized in that** the mirror (5) is arranged in such a way, that when the housings are correctly aligned to each other, the emitted alignment beam (6) of the alignment light emitter (4) is reflected back into itself or nearly into itself, and **in that** the alignment light emitter (4) and/or the mirror (5) comprise a material (9) surrounding the alignment beam (6) which makes the alignment beam (6) visible when striking the material (9).

2. Light grid according to claim 1, **characterized in that** the alignment beam (6) is a polarized beam, and **in that** a polarizing filter (7) is placed in front of the mirror (5).

3. Light grid according to one of the preceding claims, **characterized in that** the alignment beam (6) has a form of a line and **in that** a slitted aperture (8) is positioned in front of the mirror (5).

4. Light grid according to one of the preceding claims, **characterized in that** the mirror (5) is a partially reflecting mirror (5), and **in that** an alignment light receiver (11) coupled to a visual or acoustic signaling device (12) is arranged behind the mirror (5).

5. Light grid according to one of the preceding claims, **characterized in that** an alignment light receiver (10) coupled to visual or acoustic signaling device (13) is arranged adjacent to the alignment light emitter (4).

## Revendications

1. Réseau optique comportant plusieurs émetteurs de lumière (2) disposés dans un premier boîtier (1), avec des récepteurs de lumière (3) correspondants disposés dans un deuxième boîtier (1'), ainsi qu'un dispositif pour orienter les deux boîtiers (1, 1'), un émetteur de lumière d'orientation (4) étant disposé dans un boîtier (1) en plus des émetteurs de lumière (2), et un miroir (5), qui réfléchit le rayon directeur (6) vers le boîtier (1) cité en premier lieu, étant disposé dans l'autre boîtier (1'), **caractérisé en ce que** le miroir (5) est un miroir plan et est disposé de telle sorte que, lorsque les deux boîtiers sont correctement ajustés l'un par rapport à l'autre, il réfléchisse en soi ou presque en soi le rayon directeur (6) émis par l'émetteur de lumière d'orientation (4), et **en ce que** sur le boîtier (1, 1') respectif, l'émetteur de lumière d'orientation (4) et/ou le miroir (5) sont dotés autour de la marche du rayonnement de consigne du rayon directeur (6) d'un matériau (9) rendant visible le rayon directeur (6) arrivant à ce niveau.

2. Réseau optique selon la revendication 1, **caractérisé en ce que** le rayon directeur (6) est polarisé, et **en ce qu'**un filtre de polarisation (7) est disposé devant le miroir (5).

3. Réseau optique selon l'une des revendications précédentes, **caractérisé en ce que** le rayon directeur (6) est agencé en forme de lignes, et **en ce qu'**un diaphragme à fentes (8) est disposé devant le miroir (5).

4. Réseau optique selon l'une des revendications précédentes, **caractérisé en ce que** le miroir (5) est un miroir (5) semi-transparent, et **en ce qu'**un récepteur de lumière d'orientation (11) est situé derrière le miroir (5), lequel est raccordé à un dispositif de signalisation visuelle ou acoustique (12).

5. Réseau optique selon l'une des revendications précédentes, **caractérisé en ce qu'**un récepteur de lumière d'orientation (10) est disposé au voisinage de l'émetteur de lumière d'orientation (4), lequel est raccordé à un dispositif de signalisation visuelle ou acoustique (13).
